# EUROPÄISCHE PATENTSCHRIFT

(11) **EP 2 975 731 B1**
(45) Veröffentlichungstag und Bekanntmachung des Hinweises auf die Patenterteilung: **21.02.2018**
(21) Anmeldenummer: 15167077.5
(22) Anmeldetag: 11.05.2015
(51) Int. Cl.: H02K 1/27, H02K 9/22, H02K 21/24

(54) **SCHEIBENLÄUFER FÜR EINE ELEKTRISCHE MASCHINE**
DISC ROTOR FOR AN ELECTRIC MACHINE
ROTOR A DISQUE POUR UNE MACHINE ELECTRIQUE

(30) Priorität: 11.07.2014 DE 102014213508
(43) Veröffentlichungstag der Anmeldung: 20.01.2016
(73) Patentinhaber: ROBERT BOSCH GMBH, 70442 Stuttgart (DE)
(72) Erfinder: Fruehauf, Patrick, 82054 Sauerlach (DE); Kremer, Mickael, 70806 Kornwestheim (DE); Fickert, Martin, 70197 Stuttgart (DE); Braeunig, Anton, 04159 Leipzig (DE); Steinle, Matthias, 75417 Muehlacker (DE); Braun, Martin, 72149 Neustetten-Wolfenhausen (DE)

(56) Entgegenhaltungen:
- EP-A1- 2 190 108
- EP-A1- 3 128 646
- US-A- 4 187 441
- US-A1- 2013 334 910

## Beschreibung

### Technisches Gebiet

Die Erfindung betrifft elektrische Maschinen mit Scheibenläufern, insbesondere Axialfluss- oder Transversalflussmaschinen. Weiterhin betrifft die vorliegende Erfindung den Aufbau von Scheibenläufern für die Reduzierung einer Wärmeentwicklung und zur Verbesserung der Wärmeabfuhr.

### Stand der Technik

Elektrische Maschinen, insbesondere permanentmagneterregte elektrische Maschinen mit Scheibenläufern, sind aus dem Stand der Technik bekannt. So zeigt beispielsweise die Druckschrift WO 2009/115247 eine Axialflussmaschine mit einem Scheibenrotor, der im Wesentlichen aus einem amagnetischen Material, insbesondere einem Kunststoff, aufgebaut ist, in den Permanentmagnete eingebettet sind. Noch eine Anordnung aus Permanentmagneten und eine Permanentmagneten umgebende Ummantelung offenbart die US 2013/334910.

Bei permanentmagneterregten elektrischen Maschinen können in elektrisch leitfähigen Materialien während des Betriebs Wirbelströme induziert werden, die eine Erwärmung hervorrufen. Bei Scheibenläufern, bei denen die Permanentmagnete in elektrisch leitenden Materialien, wie zum Beispiel einen durch Blechlamellen (Eisenblech) aufgebauten Läuferkörper, eingesetzt sind, findet daher eine Erwärmung im Betrieb statt.

Je nach Auslegung können Permanentmagnete einen Anteil an Seltenen Erden aufweisen, wie beispielsweise NdFeB-Magnete. Die Remanenz derartiger Permanentmagnete ist stark temperaturabhängig ist und nimmt mit steigender Temperatur ab. Derartige Permanentmagnete weisen auch eine temperaturabhängige Koerzitivfeldstärke auf, die ebenfalls bei einer Erhöhung der Temperatur abnimmt. Führt die abnehmende Koerzitivfeldstärke im Betrieb zu einer Umkehr der Magnetfeldrichtung durch den Permanentmagneten, kann es zu einer Entmagnetisierung und damit zur Beschädigung oder Zerstörung der elektrischen Maschinen kommen.

Insbesondere wenn elektrische Maschinen in Arbeitsbereichen mit hoher Umgebungstemperatur eingesetzt werden, ist der Spielraum für eine weitere Temperaturerhöhung aufgrund der durch die Wirbelströme bewirkten Wärmeentwicklung begrenzt. Daher müssen für solche elektrischen Maschinen Permanentmagnete mit hoher Koerzitivfeldstärke eingesetzt werden. Diese Permanentmagnete sind jedoch teuer, und es wird daher als Material für den Läuferkörper des Scheibenläufers häufig ein elektrisch nicht leitfähiges Material eingesetzt. Jedoch haben insbesondere Kunststoffe als elektrisch nichtleitende Materialien für den Läuferkörper den Nachteil, dass in den Permanentmagneten entstehende Wärme schlecht abgeführt werden kann und dadurch eine übermäßige Erwärmung der Permanentmagnete auftritt mit den zuvor genannten Nachteilen hinsichtlich der abnehmenden Remanenz und Koerzitivfeldstärke.

Es ist daher Aufgabe der vorliegenden Erfindung, einen Scheibenläufer für eine elektrische Maschine zur Verfügung zu stellen, der eine reduzierte Wärmeentwicklung im Betrieb aufweist und bei dem die Wärme in verbesserter Weise über eine Läuferwelle abgeführt werden kann.

### Offenbarung der Erfindung

Diese Aufgabe wird durch die Axialfluss- oder Transversalflussmaschine mit einem Scheibenläufer gemäß Anspruch 1 gelöst.

Weitere Ausgestaltungen sind in den abhängigen Ansprüchen angegeben.

Gemäß einem ersten Aspekt ist ein Scheibenläufer für eine elektrische Maschine vorgesehen, umfassend:
- einen insbesondere kreis- oder ringförmigen scheibenartigen Läuferkörper; und
- Permanentmagnete, die als ein Ring in Umfangsrichtung zueinander benachbart an dem Läuferkörper angeordnet sind;
wobei der Läuferkörper ein erstes Material zur Ableitung von Wärme in radialer Richtung und im Bereich der Permanentmagnete ein zweites elektrisch nicht leitendes Material aufweist.

Eine Idee des obigen Scheibenläufers besteht darin, den Scheibenläufer abgesehen von den Permanentmagneten unter Verwendung von mehreren Materialien aufzubauen. Dabei wird ein elektrisch nichtleitendes zweites Material im Bereich der Permanentmagnete verwendet und ein thermisch leitfähiges erstes Material zwischen den Permanentmagneten und der Läuferwelle angeordnet. Dadurch ist zum einen eine gute und gleichmäßige Wärmeabführung von den Permanentmagneten zur Läuferwelle gewährleistet, und zum anderen wird die Wärmeentstehung aufgrund von induzierten Wirbelströmen im Bereich der Permanentmagneten unterbunden bzw. reduziert, ohne die mechanische Stabilität des Scheibenläufers zu beeinträchtigen.

Weiterhin ist es dadurch möglich, kostengünstigere Permanentmagnete zu verwenden, da im Betrieb der elektrischen Maschine geringere Temperaturen zu erwarten sind als dies bei Scheibenläufern, deren Läuferkörper vollständig aus elektrisch leitenden Materialien aufgebaut sind, zu erwarten wäre. Trotzdem wird aufgrund des verendeten ersten Materials eine gute Wärmeabelitung hin zur Läuferwelle bzw. Läufrnabe gewährleistet. Ferner wird eine bessere Entmagnetisierungsfestigkeit der Permanentmagnete in dem Scheibenläufer erreicht.

Weiterhin kann das erste Material eine höhere thermische Leitfähigkeit aufweisen als das zweite Material und/oder das erste Material eine höhere elektrische Leitfähigkeit aufweisen als das zweite Material.

Es kann vorgesehen sein, dass der Läuferkörper ein radial inneres Trägerelement mit dem ersten Material und einen das Trägerelement umgebenden Haltekäfig mit dem zweiten Material aufweist, wobei der Haltekäfig Ausnehmungen definiert, um die Permanentmagnete aufzunehmen.

Insbesondere können die Permanentmagnete an einem Außenumfang des Trägerelements anliegen, so dass Wärme in den Permanentmagneten nach radial innen über das Trägerelement ableitbar ist, und wobei die Permanentmagnete mit dem Trägerelement über ein thermisches Kopplungsmittel, wie z.B. eine Wärmeleitpaste, gekoppelt sind.

Weiterhin kann der Haltekäfig mit dem Trägerelement formschlüssig verbunden sein.

Der Läuferkörper kann ein Trägerelement mit dem ersten Material aufweisen, das auf einer oder beiden Seiten Magnetaufnahmebereiche als in axiale Richtung gerichtete Ausnehmungen aufweist, um Permanentmagnete aufzunehmen, wobei eine Ummantelung mit dem zweiten Material vorgesehen ist, um die Permanentmagnete zumindest teilweise zu umgeben oder zu überdecken.

Insbesondere kann das Trägerelement einen umlaufenden in axialer Richtung nach einer oder beiden Seiten abstehenden Rand aufweisen, um die Permanentmagnete in den Magnetaufnahmebereichen zu halten.

Es kann vorgesehen sein, dass der Läuferkörper ein Trägerelement mit dem ersten Material aufweist, das mit durchgängigen Ausnehmungen zur Aufnahme von in Umfangsrichtung zueinander benachbarten Permanentmagneten versehen ist, wobei eine Ummantelung mit dem zweiten Material vorgesehen ist, um die Permanentmagnete zumindest teilweise zu umgeben oder zu überdecken.

Gemäß einem nicht beanspruchten Beispiel kann das Trägerelement in einem bezüglich der Ausnehmungen radial äußeren Bereich Segmente aufweisen, die sich in axialer Richtung insbesondere bezüglich der Umfangsrichtung wechselweise erstrecken

Insbesondere kann das Trägerelement mehrlagig ausgebildet sein.

Das Trägerelement kann an einer radial äußeren Kante der Ausnehmungen mit einem sich in axialer Richtung erstreckenden Bereich versehen sein.

Weiterhin kann das Trägerelement an mindestens einer Seite mit Strukturierungen versehen sein.

Gemäß einem weiteren Aspekt ist eine elektrische Maschine mit dem obigen Scheibenläufer und einer Statoranordnung mit mindestens einer Statoreinheit vorgesehen, wobei der Scheibenläufer axial versetzt zu der Statoreinheit angeordnet ist.

### Kurzbeschreibung der Zeichnungen

Ausführungsformen und nicht beanspruchte Beispiele werden nachfolgend anhand der beigefügten Zeichnungen näher erläutert. Es zeigen:
- Figur 1: eine Querschnittsdarstellung durch eine elektrische Maschine mit einem Scheibenläufer;
- Figuren 2a und 2b: eine Draufsichtdarstellung auf einen Scheibenläufer, der aus zwei Materialien aufgebaut ist, sowie eine Querschnittsdarstellung entlang der Schnittlinie S-S;
- Figur 3: eine Darstellung eines Beispiels für eine formschlüssige Verbindung zwischen einem Trägerelement und einem Haltekäfig eines Scheibenläufers;
- Figuren 4a und 4b: verschiedene Darstellungen eines weiteren Scheibenläufers mit einem Läuferkörper mit Ausnehmungen zur Aufnahme der Permanentmagnete;
- Figuren 5a und 5b: verschiedene Darstellungen eines weiteren Scheibenläufers mit einem Läuferkörper mit Ausnehmungen zur Aufnahme der Permanentmagnete;
- Figuren 6a bis 6c: Querschnittsansichten zur Darstellung von Möglichkeiten der Ausgestaltung des Läuferkörpers bei dem nicht beanspruchten Beispiel der Figuren 5a und 5b; und
- Figur 7: ein Draufsicht auf den Läuferkörper der Figuren 5a und 5b, wobei mindenstens eine Seitenfläche mit einer Strukturierung versehen ist.

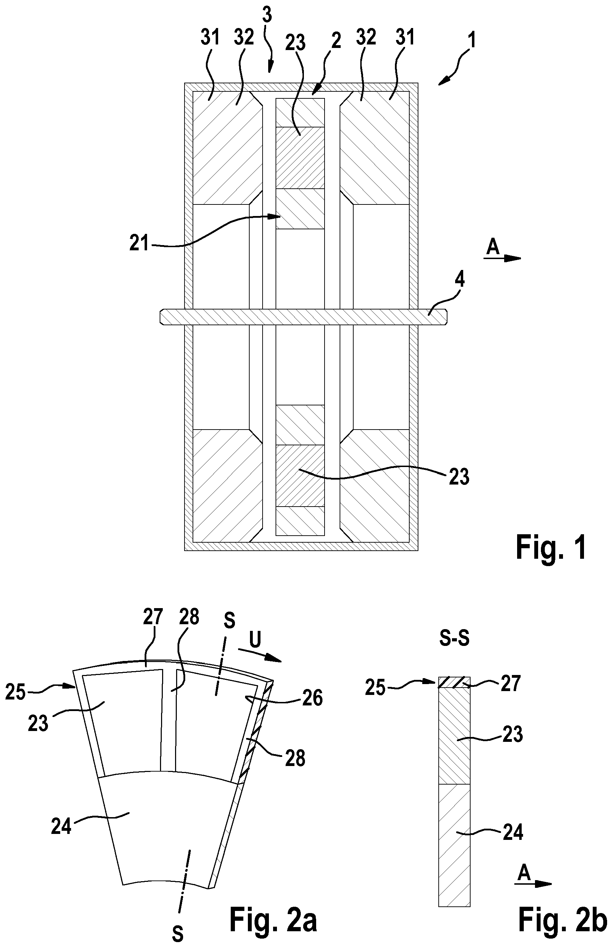

Beschreibung von Ausführungsformen und nicht beanspruchte Beispiele Figur 1 zeigt eine Querschnittsdarstellung durch eine elektrische Maschine 1 mit einem Scheibenläufer 2 und einer Statoranordnung 3 angeordnet.

Der Scheibenläufer 2 weist einen ringförmigen Läuferkörper 21 auf und ist drehbeweglich an einer Läuferwelle 4 gehalten. Der Läuferkörper 21 kann direkt mit der Läuferwelle 4 gekoppelt sein oder über ein z.B. topfförmiges Trägerelement 22 an einer axial versetzten Position mit der Läuferwelle 4 gekoppelt sein.

Der Läuferkörper 21 des Scheibenläufers 2 kann zwischen zwei Statoreinheiten 31 der Statoranordnung 3 angeordnet sein. Jede der Statoreinheiten 31 kann jeweils in axialer Richtung A abstehende Statorzähne 32 aufweisen. Die Statorzähne 31 können weiterhin in Umfangsrichtung mit Abstand zueinander benachbart konzentrisch um die Drehachse der Läuferwelle 4 angeordnet sein. Die Statoreinheiten 31 können jeweils umlaufende Statorwicklungen (nicht gezeigt) umfassen, die zur wechselweisen Magnetisierung der Statorzähne 32 bestromt werden können.

Der Scheibenläufer 2 kann in einem magnetisch aktiven Bereich mit Permanentmagneten 23 versehen sein, die in Umfangsrichtung nebeneinander angeordnet sind und die eine Polrichtung in Umfangsrichtung aufweisen können. Läuferpole werden dadurch zwischen den Permanentmagneten 23 des Scheibenläufers 2 ausgebildet. Alternativ kann die Polungsrichtung der Permanentmagnete 23 auch in axialer Richtung verlaufen.

Figuren 2a und 2b zeigen eine Draufsicht auf einen Scheibenläufer 2 bzw. eine Querschnittsansicht quer zur Umfangsrichtung durch einen Scheibenläufer 2, der zur Reduzierung einer Wärmeentwicklung und zur Verbesserung einer Wärmeabführung ausgebildet ist. Der Läuferkörper 21 des Scheibenläufers 2 weist ein Trägerelement 24 auf, das zwischen den Permanentmagneten 23 und der Läuferwelle 4 angeordnet ist. Das Trägerelement 24 weist eine im Wesentlichen kreisförmige oder polygonale Außenkontur auf, an die sich die entsprechend zugewandten Flächen der Permanentmagnete 4 so anschließen, dass diese thermisch mit dem Trägerelement 24 gekoppelt sind, d.h. dass zwischen den Permanentmagneten 4 und dem Trägerelement 24 eine hohe thermische Leitfähigkeit vorliegt. Insbesondere ist die äußere Kontur des Trägerelements 24 so ausgebildet, dass die zugewandte Seite der Permanentmagente 23 daran flächig anliegt.

Die Permanentmagnete 4 werden durch einen Haltekäfig 25 des Läuferkörpers 21 gehalten, der Ausnehmungen 26 zur Aufnahme der Permanentmagnete 4 aufweist. Der Haltekäfig 25 weist radial außerhalb der Ausnehmungen 26 Brückenelemente 27 auf, die über die Permanentmagnete 23 verlaufen und diese in den Ausnehmungen 26 halten. Zwischen die Permanentmagnete 23 des Scheibenläufers 2 erstrecken sich Schenkel 28. Der Haltekäfig 25 ist mit abstehenden Enden der Schenkel 28 mit dem Trägerelement 24 verbunden.

Zur Verbesserung der Wärmeabführung aus den Permanentmagneten 23 ist das Trägerelement 24 aus einem thermisch gut leitfähigen Material, insbesondere aus einem Metall ausgebildet. Das Trägerelement 24 kann beispielsweise aus Blechlamellen ausgebildet sein. Um einen magnetischen Kurzschluss durch das Trägerelement 24 zu vermeiden, kann es vorteilhaft sein, das Trägerelement 24 aus einem nichtmagnetischen Material, wie beispielsweise Aluminium oder dergleichen, auszubilden.

Der Haltekäfig 25, der mit den Brückenelementen 27 radial außerhalb und mit seinen Schenkel 28 zwischen den Permanentmagneten 23 angeordnet ist, ist vorzugsweise aus einem elektrisch nichtleitenden Material, wie beispielsweise einem Kunststoff, ausgebildet, so dass dort keine Wirbelströme induziert werden, die zu einer Wärmeentwicklung führen können.

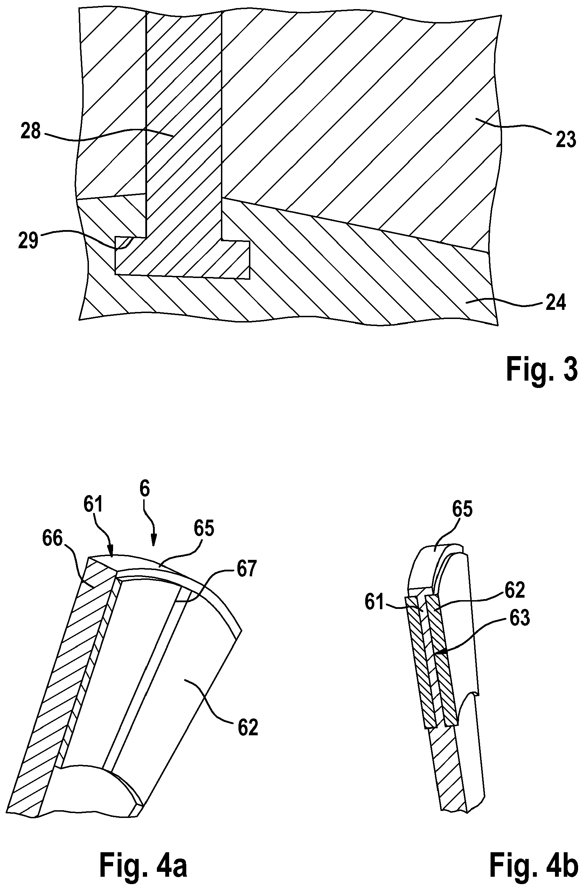

Figur 3 zeigt ein Beispiel für eine Verankerung der abstehenden Enden der Schenkel 28 des Haltekäfigs 22 in dem Trägerelement 24. Zum Halten des Haltekäfigs 25 an dem Trägerelement 24 kann das Trägerelement 24 Aufnahmeausnehmungen 29 mit einem Hinterschnitt aufweisen, in die entsprechende Vorsprünge der Schenkel 28 des Haltekäfigs 25 eingreifen und dort formschlüssig gehalten werden. Auch eine Rastverbindung zwischen den Schenkeln 28 und dem Trägerelement 24 ist denkbar. Konstruktionsabhängig können auch stoffschlüssige Verbindungen, wie z.B. Klebeverbindungen, vorgesehen werden. Auf diese Weise bilden das Trägerelement 2 und die Brückenelemente 27 des Haltekäfigs 25 gemeinsam die Ausnehmungen 26 zur Aufnahme der Permanentmagnete 23.

Zur Verbesserung der Wärmeabfuhr aus den Permanentmagneten 23 in Richtung des Trägerelements 24 kann an der Außenseite des Trägerelements 21, d.h. zwischen dem Trägerelement 24 und den Permanentmagneten 23, eine Wärmeleitpaste oder dergleichen als ein thermisches Kopplungsmittel vorgesehen werden.

In den Figuren 4a und 4b sind verschiedene perspektivische Ansichten eines weiteren Scheibenläufers 6 dargestellt. Der weitere Scheibenläufer 6 der Figuren 4a und 4b weist einen Läuferkörper 61 mit einem Trägerelement 66 auf, das mit einem Magnetaufnahmebereich 63 ausgebildet ist, an dem Permanentmagnete 62 in axialer Richtung aufgesetzt werden. Insbesondere ist der Magnetaufnahmebereich 63 als in axialer Richtung gerichtete Ausnehmungen auf einer oder beiden Seiten des Trägerelements 66 ausgebildet, so dass dort in Umfangsrichtung zueinander benachbarte Permanentmagnete 62 eingesetzt bzw. eingeklebt oder in sonstiger Weise darin befestigt werden können.

Im Bereich des Magnetaufnahmebereichs 63 weist das Trägerelement 66 eine verringerte Dicke auf, wobei die verbleibende Dicke des Trägerelements 66 vorzugsweise so gewählt ist, dass durch die Wärmeabführung aus dem Permanentmagneten 62 größer ist als die durch Wirbelströme im Betrieb der elektrischen Maschine darin erzeugte Wärme. Weiterhin ist sicherzustellen, dass die Dicke des Trägerelements 66 ausreichend ist, um die ausreichende Festigkeit auch beim Betrieb bei der maximalen Drehzahl zu gewährleisten.

Um beim Betrieb die Permanentmagneten 62 zuverlässig an dem Trägerelement 66 zu halten, kann das Trägerelement 66 mit einem umlaufenden Rand 65 vorgesehen sein, an dem sich die Permanentmagneten 62 nach außen hin abstützen können. Bei dem gezeigten nicht beanspruchten Beispiel sind die Permanentmagnete 62 beidseitig des Trägerelements 66 in entsprechenden Ausnehmungen des Magnetaufnahmebereichs 63 angeordnet, wobei zur Ausbildung von Läuferpolen die Polungsrichtungen in axialer Richtung oder in Umfangsrichtung ausgeführt sein können.

Alternativ kann der Läuferkörper 61 auch ohne umlaufenden Rand 65 vorgesehen sein, um die Massenträgheit des Scheibenläufers 6 zu reduzieren. In diesem Fall ist eine zuverlässiges Halten der Permanentmagnete 62 durch Verkleben oder durch eine sonstige Befestigungsart notwendig.

Die in dem Aufnahmebereich angeordneten Permanentmagnete 62 können von einer Ummantelung 67 aus einem elektrisch nicht leitfähigen Material, wie beispielsweise einem Kunststoff, umgeben, insbesondere umspritzt sein. Die Ummantelung 67 kann dazu dienen, die Permanentmagnete 62 zu fixieren und vor äußeren Einflüssen zu schützen. Da die Ummantelung 67 elektrisch nichtleitend ist, können keine Wirbelströme entstehen, so dass keine zusätzliche Wärme in die Permanentmagnete 62 eingetragen wird.

In dem Scheibenläufer 6 entstehende Wärme kann über den Läuferkörper 61, der vorzugsweise aus einem thermisch gut leitfähigen Material, wie beispielsweise Aluminium, ausgebildet ist, abgeführt werden. Insbesondere die große Auflagefläche der Permanentmagneten 62 im Aufnahmebereich sorgt für eine gute Wärmeabführung in Richtung der Läuferwelle 4.

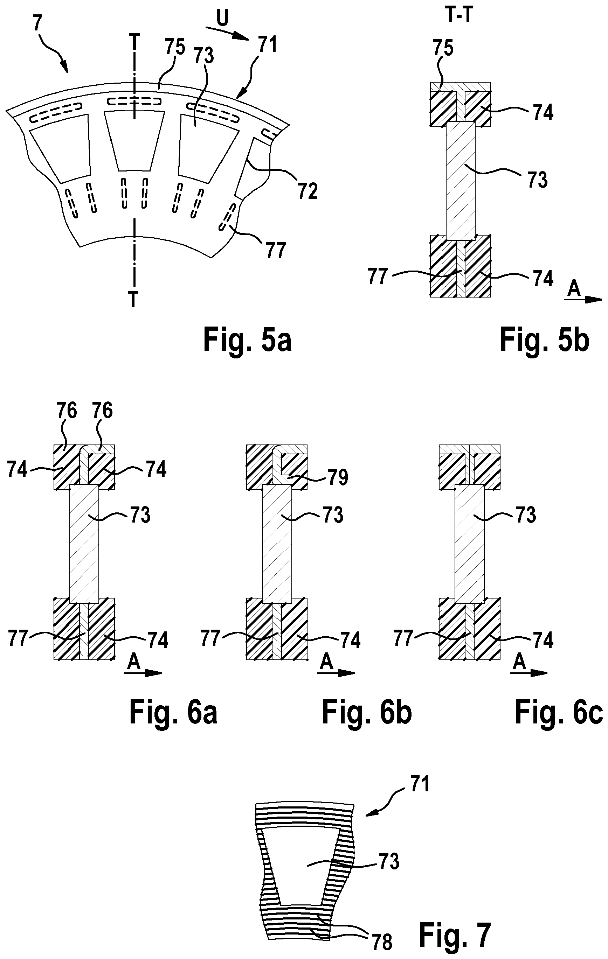

In den Figuren 5a und 5b sind eine Draufsichtdarstellung und eine Querschnittsdarstellung durch einen Scheibenläufer 7 eines weiteren nicht beanspruchten Beispiels gezeigt. Ein scheiben- oder ringförmiger Läuferkörper 71 des Scheibenläufers 7 weist ein Trägerelement 77 auf, das mit in axialer Richtung A durchgängigen Ausnehmungen 72 zur Aufnahme von in Umfangsrichtung zueinander benachbarten Permanentmagneten 73 versehen ist. Das Trägerelement 77 ist aus einem thermisch gut leitenden Material wie z.B. Aluminium ausgebildet. Das Trägerelement 77 kann auch aus einem magnetisch leitenden Blechmaterial ausgebildet sein. Radial außerhalb der Ausnehmungen 72 befindet sich ein in axialer Richtung aus der Ebene des Trägerelements 77 hervorstehender Rand 75, der ganz oder teilweise umlaufend ausgebildet sein kann. Der ganz oder teilweise umlaufende Rand kann axial in einer oder in beide Richtugnen des Scheibenläufers 7 hervorstehen.

Zum Fixieren der Permanentmagnete 73 kann eine Ummantelung 74 aus einem elektrisch und magnetisch nicht leitenden (amagnetischen) Material, wie z.B. Kunststoff, vorgesehen sein, die die Permanentmagnete 73 und/oder das Trägerelement 77 ganz oder teilweise auf mindestens einer Seite des Trägerelements 77 bedeckt bzw. umschließt. Zumindest kann die Ummantelung 74 lediglich den radial inneren Rand und/oder den radial äußeren Rand der Permanentmagnete 73 umschließen, um diese an dem Trägerelement 77 zu halten, wobei an einem Mittenbereich bezüglich der radialen Richtung keine Ummantelung 74 vorgesehen ist.

In den Figuren 6a bis 6c sind verschiedene Möglichkeiten der Ausbildung des Läuferkörpers 71 in einem radial äußeren Bereich des Läuferkörpers 71 dargestellt. In Figur 6a ist eine Querschnittsansicht des radial äußeren Bereichs des Trägerelements 77 dargestellt, wobei ein äußerer Bereich in abstehende benachbarte Segmente 76 segmentiert ist, die wechselweise in zueinander entgegengesetzten axialen Richtung abgebogen sind, um einen umlaufenden Rand 75 auszubilden.

Der umlaufende Rand 75 steht im Gegensatz zum nicht beanspruchten Beispiel der Figuren 4a und 4b nicht direkt sondern über einen Zwischenbereich des Trägerelements 77 mit den Permanentmagneten 73 in thermischen Kontakt, so dass im Trägerelement 77 und in den Permanentmagneten 73 entstehende Wärme in den Permanentmagneten 73 an die Segmente 76 des umlaufenden Rands 75 abgeleitet werden kann. Die Segmente 76 führen bei einer Drehung zu einer Wärmeübertragung von dem Trägerelement 77 an das Umgebungsmedium durch Verwirbelung des Umgebungsmediums, so dass eine zuverlässige Wärmeabführung in radialer Richtung nach außen gewährleistet wird. Das nicht beanspruchte Beispiel der Figur 6b unterscheidet sich von dem nicht beanspruchten Beispiel der Figur 6a dadurch, dass die Ausnehmungen 72 mit sich in axialer Richtung erstreckenden Bereichen 79, insbesondere mit umgebogenen Kanten, ausgebildet ist, die es ermöglichen, die Permanentmagnete 72 besser zu halten und diese mit einer größeren Fläche für eine bessere Wärmeableitung zu kontaktieren. Das nicht beanspruchte Beispiel der Figur 6c zeigt ein aus zwei gestapelten Blechen bzw. Scheiben gebildetes Trägerelement 77, wobei am radial äußeren Rand des so gebildeten Trägerelement 77 Segmente 76 an beiden Blechen vorgesehen sind, die in zueinander entgegengesetzten Richtungen abgebogen sind.

Figur 7 zeigt ausschnittsweise in einer Draufsicht auf das Trägerelement 77 eine Strukturierung 78, wie z.B. eine Riffelung, die eine Verwirbelung des Umgebungsmediums auch entlang der Seitenfläche des Trägerelements 77 ermöglicht und dadurch die Wärmeabführung verbessern kann.

## Patentansprüche

1. Axialfluss- oder Transversalflussmaschine mit einem Scheibenläufer (2,6,7), umfassend:
- einen kreis- oder ringförmigen scheibenartigen Läuferkörper (21, 61, 71);
- Permanentmagnete (23, 62, 73), die in Umfangsrichtung zueinander benachbart an dem Läuferkörper (21, 61, 71) angeordnet sind; wobei
- der Läuferkörper (21, 61, 71) ein Trägerelement (24) aus einem ersten Material zur Ableitung von Wärme in radialer Richtung aufweist; **dadurch gekennzeichnet, dass**:
- der Läuferkörper (21) einen das Trägerelement (24) umgebenden Haltekäfig (25) aus einem zweiten Material aufweist, wobei der Haltekäfig (25) Ausnehmungen (26) definiert, um die Permanentmagnete (23) aufzunehmen; wobei
- das erste Material eine höhere thermische Leitfähigkeit aufweist als das zweite Material und/oder das erste Material eine höhere elektrische Leitfähigkeit aufweist als das zweite Material.

2. Axialfluss- oder Transversalflussmaschine nach Anspruch 1, wobei die Permanentmagnete (23) an einem Außenumfang des Trägerelements (24) anliegen, so dass Wärme in den Permanentmagneten (23) nach radial innen über das Trägerelement (24) ableitbar ist, und wobei die Permanentmagnete (23) mit dem Trägerelement (24) über ein thermisches Kopplungsmittel gekoppelt sind.

3. Axialfluss- oder Transversalflussmaschine nach Anspruch 1 oder 2, wobei der Haltekäfig (25) mit dem Trägerelement (24) formschlüssig oder stoffschlüssig verbunden ist.

4. Axialfluss- oder Transversalflussmaschine nach einem der Ansprüche 1 bis 3, wobei das Trägerelement (77) an mindestens einer Seite mit Strukturierungen (78) versehen ist.

5. Axialfluss- oder Transversalflussmaschine nach einem der Ansprüche 1 bis 4, mit einer Statoranordnung (39) mit mindestens einer Statoreinheit (31), wobei der Scheibenläufer (2, 6, 7) axial versetzt zu der mindestens einen Statoreinheit (31) angeordnet ist.

## Claims

1. Axial flux machine or transverse flux machine having a disc rotor (2, 6, 7), comprising:
- a circular or annular disc-like rotor body (21, 61, 71);
- permanent magnets (23, 62, 73) which are arranged on the rotor body (21, 61, 71) adjacently with respect to one another in the circumferential direction;
- the rotor body (21, 61, 71) having a carrier element (24) made from a first material for dissipating heat in the radial direction; **characterized in that**
- the rotor body (21) has a holding cage (25) which is made from a second material and surrounds the carrier element (24), the holding cage (25) defining recesses (26), in order to receive the permanent magnets (23);
- the first material having a higher thermal conductivity than the second material and/or the first material having a higher electric conductivity than the second material.

2. Axial flux machine or transverse flux machine according to Claim 1, the permanent magnets (23) bearing against an outer circumference of the carrier element (24), with the result that heat in the permanent magnets (23) can be dissipated radially inwards via the carrier element (24), and the permanent magnets (23) being coupled to the carrier element (24) via a thermal coupling means.

3. Axial flux machine or transverse flux machine according to Claim 1 or 2, the holding cage (25) being connected to the carrier element (24) in a positively locking or integrally joined manner.

4. Axial flux machine or transverse flux machine according to one of Claims 1 to 3, the carrier element (77) being provided with structures (78) on at least one, side.

5. Axial flux machine or transverse flux machine according to one of Claims 1 to 4, having a stator arrangement (39) with at least one stator unit (31), the disc rotor (2, 6, 7) being arranged offset axially with respect to the at least one stator unit (31).

## Revendications

1. Machine à flux axial ou à flux transversal comprenant un rotor à disque (2, 6, 7), comprenant :
- un corps de rotor (21, 61, 71) de type disque circulaire ou annulaire ;
- des aimants permanents (23, 62, 73) qui sont disposés au niveau du corps de rotor (21, 61, 71) dans la direction périphérique en position adjacente les uns aux autres ;
- le corps de rotor (21, 61, 71) présentant un élément de support (24) constitué d'un premier matériau pour évacuer la chaleur dans une direction radiale ;
**caractérisée en ce que** :
- le corps de rotor (21) présente une cage de retenue (25) en un deuxième matériau, entourant l'élément de support (24), la cage de support (25) définissant des évidements (26) afin de recevoir les aimants permanents (23) ;
- le premier matériau présentant une conductibilité thermique plus élevée que le deuxième matériau et/ou le premier matériau présentant une conductibilité électrique plus élevée que le deuxième matériau.

2. Machine à flux axial ou à flux transversal selon la revendication 1, dans laquelle les aimants permanents (23) s'appliquent contre une périphérie extérieure de l'élément de support (24), de telle sorte que de la chaleur dans les aimants permanents (23) puisse être évacuée radialement vers l'intérieur par le biais de l'élément de support (24), et les aimants permanents (23) étant accouplés à l'élément de support (24) par le biais d'un moyen d'accouplement thermique.

3. Machine à flux axial ou à flux transversal selon la revendication 1 ou 2, dans laquelle la cage de retenue (25) est connectée par engagement par correspondance de formes ou par liaison de matière à l'élément de support (24).

4. Machine à flux axial ou à flux transversal selon l'une quelconque des revendications 1 à 3, dans laquelle l'élément de support (77) est pourvu de structurations (78) au niveau d'au moins un côté.

5. Machine à flux axial ou à flux transversal selon l'une quelconque des revendications 1 à 4, comprenant un agencement de stator (39) avec au moins une unité de stator (31), le rotor à disque (2, 6, 7) étant disposé de manière décalée axialement par rapport à l'au moins une unité de stator (31).
